# EUROPEAN PATENT APPLICATION

(11) **EP 1 535 724 A1**
(43) Date of publication of application: **01.06.2005**
(21) Application number: 04024285.1
(22) Date of filing: 12.10.2004
(51) Int. Cl.: B29C 67/00, B29C 49/60, B29C 49/04

(54) **Method of blow-moulding and blow-moulded product**

(30) Priority: 25.11.2003 GB 0327345
(71) Applicant: Linpac Mouldings Limited, Birmingham, B37 7YN (GB)
(72) Inventor: Mealia, Michael J., Skelmersdale WN8 6UE (GB)
(74) Representative: Raynor, Simon Mark

(57) **Abstract**

A method ofblow-moulding comprises forming a parison (44) of a thermoplastics material, closing a mould (20) around the parison, injecting compressed gas into the parison through a blowing hole (45) to form a moulded product that is shaped according to the shape of the mould, then deforming a seal forming portion (49) of the moulded product with a heated sealing tool (50) to seal the blowing hole. The seal forming portion (49) preferably comprises a tubular collar (46) that surrounds the blowing hole.

## Description

The present invention relates to a method of blow-moulding and to a blow-moulded product.

Blow-moulding processes are commonly used for manufacturing a wide variety of hollow plastics products including, for example, bottles and containers. Typically, a tube (or parison) is extruded into a mould which is then closed around the parison. A needle is then inserted into the parison and compressed air is injected to blow the parison into the shape of the mould. The needle is then withdrawn, the mould is opened and the finished product is removed.

Products made by the above process are left with a blowing hole formed by the needle, which typically has a diameter of approximately 5mm. For certain products such as food containers, this blowing hole may have to be sealed to prevent water and dirt from entering and leaving the interior of the moulding, as this could contaminate foodstuffs within the container.

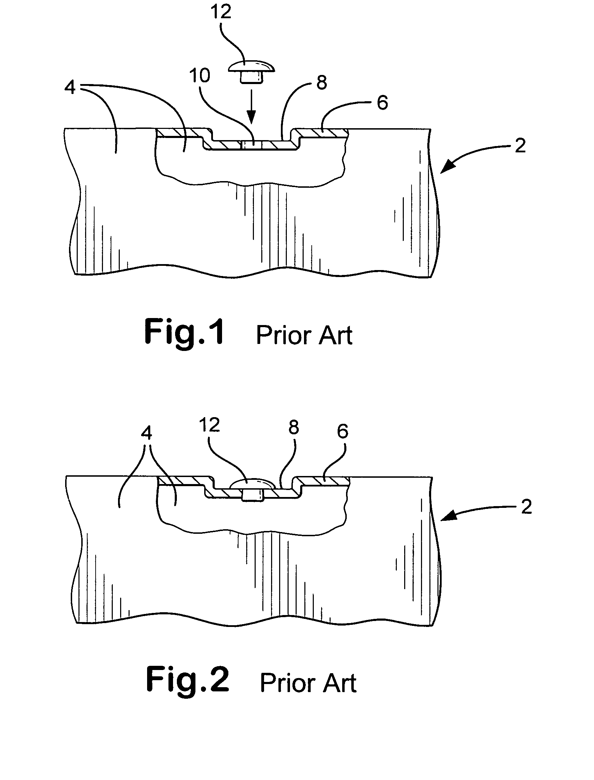

An example of a prior art blow-moulded product made by the process described above is shown in Figures 1 and 2 of the drawings. The product 2 is a wall panel of a bulk container and the drawings show a portion of the wall panel, partially broken away. The panel includes two parallel rectangular side plates 4 that are interconnected by a peripheral wall 6. A shallow recess 8 is provided in one portion of the peripheral wall and a blowing hole 10 is located in that recess. To seal the blowing hole, a plug 12 is inserted and fixed in position. The recess allows the top of the plug 12 to lie flush with the edge of the panel, as shown in Figure 2.

Inserting a plug to seal the blowing hole in a blow-moulded product is a fiddly and time-consuming process, which requires an additional component and adds to the overall production costs. There is also a risk that the blowing hole could be incompletely sealed and/or that the plug could work loose during use. It is an object of the present invention to provide a method of sealing the blowing hole in a blow-moulded product that mitigates at some of the aforesaid disadvantages.

According to the present invention there is provided a method of blow-moulding, the method including forming a parison of a thermoplastics material, closing a mould around the parison, injecting compressed gas into the parison through a blowing hole to form a moulded product that is shaped according to the shape of the mould, and deforming a seal forming portion of the moulded product with a heated sealing tool to seal the blowing hole.

The invention allows the blowing hole to be sealed quickly and easily, without requiring an additional component. Production costs are thereby reduced. There is also a reduced risk of an incomplete seal and, because the seal is an integral part of the moulded product, it cannot work loose.

Advantageously, the mould is shaped to provide the moulded product with a seal forming portion, which is preferably located adjacent the blowing hole. The seal forming portion may include a tubular collar that surrounds the blowing hole and extends outwards from the moulded product. The tubular collar may for example be moulded between an orifice in the mould and a gas injection needle that is inserted into the mould.

The mould is preferably shaped to form a locking element that restricts movement between the tubular collar and the mould. The locking element may include a flange element that is provided on the tubular collar. This helps to prevent the tubular collar being pushed into the moulded product when the gas injection needle is inserted.

Advantageously, the mould is shaped to provide the moulded product with a recess in the vicinity of the blowing hole and the seal forming portion is deformed to form a seal element that is located within the recess. This construction makes it possible to avoid having a seal element that protrudes outwards beyond the edges of the moulded product.

According to a further aspect of the invention there is provided a blow-moulded product including a hollow moulded body portion and a seal element that seals a blowing hole in the body portion, wherein the body portion and the seal element are made of a thermoplastics material and the seal element comprises a deformed seal forming portion of the body portion.

The blow moulded product can be sealed quickly and easily, without requiring an additional component, with reduced production costs. The risk of an incomplete seal or a loose plug is significantly reduced.

Advantageously, the seal forming portion is located within a recess provided in the moulded body portion.

The blow-moulded product may for example comprise a wall panel of a container, or any other suitable product.

An embodiment of the invention will now be described by way of example, with reference to the accompanying drawings, wherein:
Figure 1 is a broken away partial front elevation of a prior art moulded product, illustrating the insertion of the sealing plug;
Figure 2 is a broken away partial front elevation of the prior art moulded product, after insertion of the sealing plug;
Figure 3 is a front elevation of one half of a blow moulding tool according to an embodiment of the invention;
Figure 4 is a side section showing an extruded parison located between two halves of a moulding tool according to the invention, with the mould in an open position;
Figure 5 is a side section showing the parison within the closed moulding tool;
Figure 6 is a side section showing the moulded product after blowing (for clarity, the moulding tool has been omitted);
Figure 7 is a side section of the moulded product after removal from the mould, during a sealing operation;
Figure 8 is side section of the finished moulded product after sealing; and
Figure 9 is a sectional front elevation of the finished moulded product after sealing.

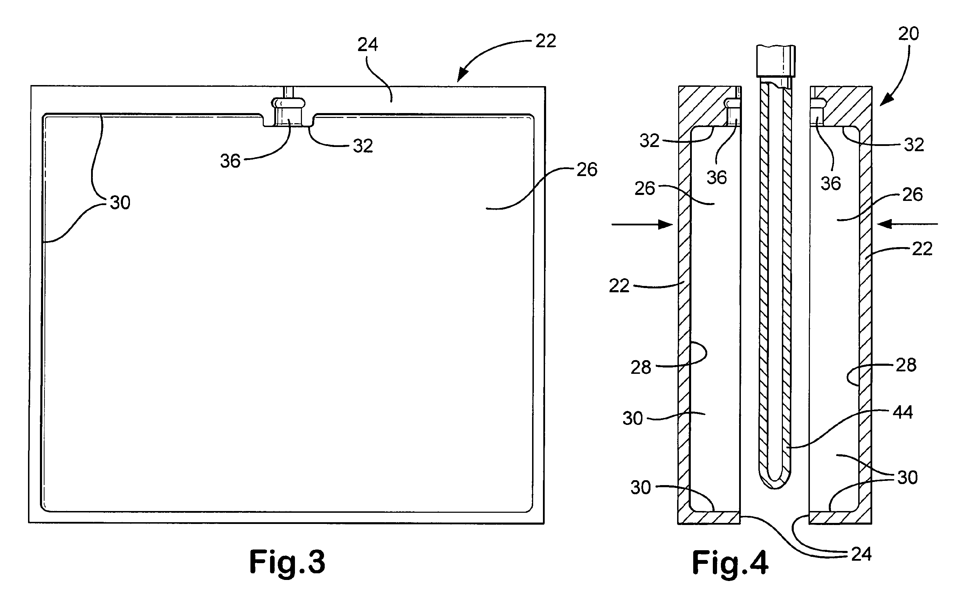

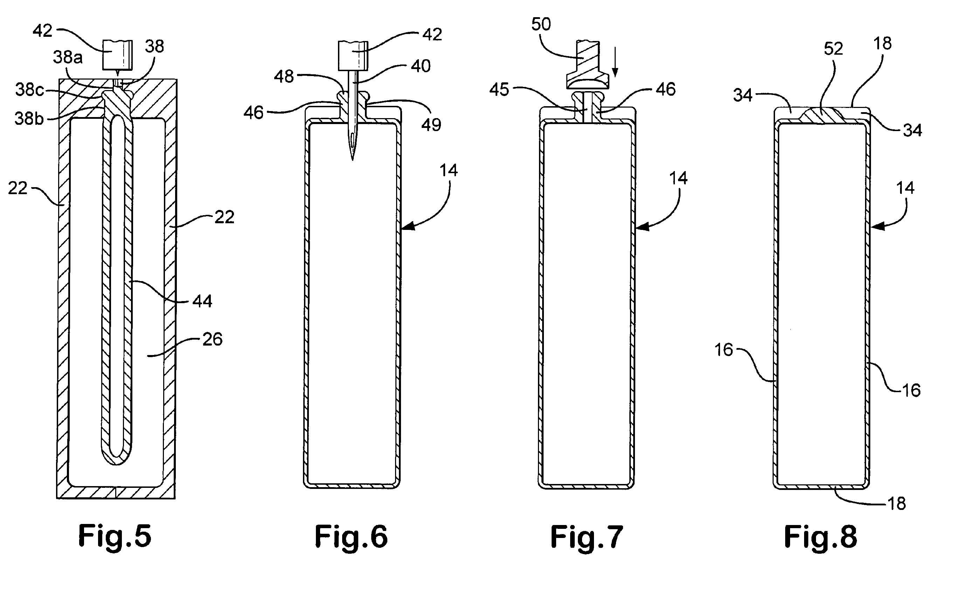

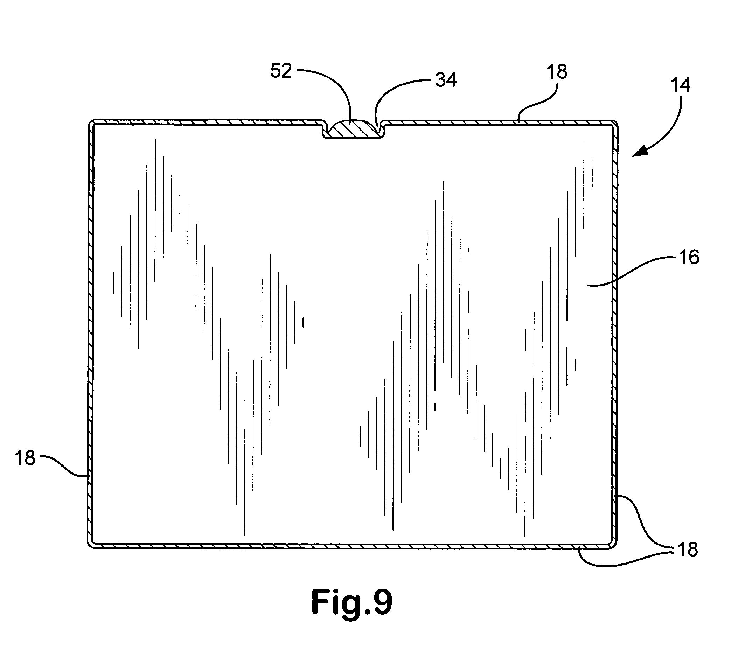

The embodiment of the invention depicted in Figures 3 to 9 of the drawings illustrates a method of moulding a blow-moulded product 14 such as a simple rectangular wall panel, which may for example form part of a bulk container or crate. The wall panel, which is shown in Figures 8 and 9, includes two parallel rectangular side plates 16 that are interconnected by a peripheral wall 18. It will be appreciated that many other products may also be made by substantially similar processes and that the present application is intended to cover such products and the processes for making them.

The blow-moulding tool 20 shown in Figures 3 and 4 includes two symmetrically identical mould halves 22, each of which includes a mating surface 24 that in use mates against a corresponding surface on the other mould half, and a substantially rectangular mould cavity 26 that comprises a side face 28 for moulding a side plate 16 of the blow-moulded product and a surrounding peripheral face 30 for forming the peripheral wall 18 of the product. The peripheral face 30 includes a portion 32 that protrudes inwards, to form a recess 34 in the peripheral wall of the moulded product.

A channel 36 is provided in the mating surface 24 of each mould half 22, at the location of the protruding portion. When the mould halves 22 are brought together, these channels 36 form an orifice 38 that extends through the mould tool 20 from the exterior to the interior of the mould cavity 26. This allows an air injection needle 40 to be inserted through the mould tool 20 into the mould cavity, for blowing compressed air into the parison, to inflate the moulded product 14 within the mould.

The features of the blow-moulding tool 20 as described above are all conventional. Where the tool differs from prior art blow-moulding tools is in the shape of the orifice 38. In the prior art, this orifice generally consists simply of a cylindrical bore having a diameter slightly greater than that of the air injection needle 40, so as to allow the needle to be inserted. In the embodiment of the invention shown in the drawings, the orifice 38 includes an outer portion 3 8a comprising a cylindrical bore with a diameter slightly greater than that of the needle 40 (for example approximately 5mm), an inner portion 38b of slightly larger diameter (for example approximately 8mm) and an intermediate portion 38c of even larger diameter (for example approximately 10mm). It will be appreciated that the dimensions quoted above are only illustrative and are not intended to be limiting in any way.

The inner and intermediate portions 38b, 38c of the orifice are therefore significantly larger than the needle 40, thus forming an annular gap between the needle 40 and the sides of the orifice 38. During use, melted thermoplastics material is moulded in this gap to form a tubular collar, which is subsequently deformed to seal the blowing hole.

The blow moulding process will now be described in detail with reference to Figures 4-7.

First, as shown in Figure 4, a tube of heated thermoplastics material is extruded through an extrusion nozzle 42 into a gap between the two halves 22 of the mould, which at this stage is open. The extruded material forms a parison 44 comprising a hollow tube that is closed at its lower end.

The mould 20 is then closed as shown in Figure 5. The upper part of the parison 44 is nipped between the two halves of the mould forming a plug of material within the orifice 38 in the upper part of the mould. The air injection needle 40 is then inserted through the orifice 38 into the parison 44 and compressed air is injected to inflate the parison, so forming a moulded product 14 matching the internal shape of the mould, as shown in Figure 6 (the mould tool has been omitted in this drawing for the sake of clarity). Once the thermoplastics material has set, the needle 40 is withdrawn, leaving a blowing hole 45. The mould 20 is then opened and the moulded product 14 is removed.

As can be seen in Figures 6 and 7, the moulded product 14 includes a tubular collar 46 that extends from the upper edge of the moulded product, this collar having been shaped within the gap between the wall of the orifice 38 and the air injection needle 40. The lower part of the collar 46 is substantially cylindrical, having been formed by the inner portion 38b of the orifice, and at its upper end the collar has an outwardly extending flange 48 formed by the intermediate portion 38c of the orifice. The collar 46 and the flange 48 provide a seal forming portion 49 of the moulded product, which may be deformed to seal the blowing hole 45.

After the blow-moulded product has been removed from the mould tool, it is subjected to a second processing step, in which a heated sealing tool 50 is applied to the seal forming portion 49. The sealing tool 50 re-heats and melts the thermoplastics material of the seal forming portion 49 and squashes it downwards, thereby sealing the blowing hole 45. The remelted material thus forms a dome-like seal element 52 that is accommodated within the recess 34 in the edge of the moulded product 14, the upper part of the seal element 52 lying flush with or slightly below the edge of the product, as shown in Figures 8 and 9.

The process described above thus provides a very simple method for sealing the blowing hole 45. The seal element 52 is formed as an integral part of the blow-moulded product 14, thereby obviating the need for a separate plug. Sealing the blowing hole 52 is a very simple process involving the application of a heated sealing tool 50. This process can be carried out manually or it can be automated, if desired.

The shape of the seal forming portion 49 is important for successful sealing of the product. We have found that the seal forming portion 49 preferably comprises a tubular collar 46 having a flange 48 at its outer end. The flange 48 supports the collar 46 within the orifice 38 in the mould 20 and prevents it from being deformed as the needle 40 is inserted. We have found that if a flange 48 is not provided, the collar 46 tends to be forced inwards as the needle 40 is inserted, which makes subsequent sealing very difficult.

It will be appreciated that various modifications of the process described herein may be made, the process described being merely illustrative of one embodiment of the invention.

## Claims

1. A method of blow-moulding, the method including forming a parison (44) of a thermoplastics material, closing a mould (20) around the parison, and injecting compressed gas into the parison (44) through a blowing hole (45) to form a moulded product (14) that is shaped according to the shape of the mould (20); **characterised by** deforming a seal forming portion (49) of the moulded product (14) with a heated sealing tool (50) to seal the blowing hole (45).

2. A method according to claim 1, wherein the mould (20) is shaped to provide the moulded product with a seal forming portion (49).

3. A method according to claim 2, wherein the mould (20) is shaped such that the seal forming portion (49) is located adjacent the blowing hole (45).

4. A method according to claim 2 or claim 3, wherein the seal forming portion (49) includes a tubular collar (46) that surrounds the blowing hole (45).

5. A method according to claim 4, wherein the tubular collar (46) extends outwards from the moulded product.

6. A method according to claim 4 or claim 5, wherein the mould (20) is shaped to form a locking element (48) that restricts movement between the tubular collar (46) and the mould (20).

7. A method according to claim 6, wherein the locking element includes a flange element (48) that is provided on the tubular collar (46).

8. A method according to any one of the preceding claims, wherein the mould (20) is shaped to provide the moulded product (14) with a recess (34) in the vicinity of the blowing hole (45).

9. A method according to claim 8, wherein the seal forming portion (49) is deformed to form a seal element (52) that is located within the recess (34).

10. A blow-moulded product (14) including a hollow moulded body portion and a seal element (52) that seals a blowing hole (45) in the body portion; **characterised in that** the body portion and the seal element are made of a thermoplastics material and the seal element (52) comprises a deformed seal forming portion (49) of the body portion.

11. A blow-moulded product according to claim 10, wherein the seal element (52) is located within a recess (34) provided in the moulded body portion.

12. A blow-moulded product according to claim 10 or claim 11, wherein the blow-moulded product (14) comprises a wall panel of a container.
